# EUROPÄISCHE PATENTSCHRIFT

(11) **EP 3 865 948 B1**
(45) Veröffentlichungstag und Bekanntmachung des Hinweises auf die Patenterteilung: **18.11.2026**
(21) Anmeldenummer: 21155545.3
(22) Anmeldetag: 05.02.2021
(51) Int. Cl.: G03H 1/02, G03H 1/20, G03H 1/30, G03H 1/00, G03H 1/04

(54) **BELICHTUNGSTISCH FÜR EINE HOLOGRAMMBELICHTUNGSMASCHINE UND VERFAHREN ZUM EINBRINGEN EINES VOLUMENREFLEXIONSHOLOGRAMMS IN EINEN FILMABSCHNITT**
EXPOSURE TABLE FOR A HOLOGRAM EXPOSURE MACHINE AND METHOD FOR INSERTING A VOLUME REFLECTIVE HOLOGRAM INTO A FILM SECTION
TABLE D'EXPOSITION POUR UNE MACHINE D'EXPOSITION HOLOGRAMME ET PROCÉDÉ D'INSERTION D'UN HOLOGRAMME DE RÉFLEXION DE VOLUME DANS UNE SECTION DE FILM

(30) Priorität: 12.02.2020 DE 102020103613
(43) Veröffentlichungstag der Anmeldung: 18.08.2021
(73) Patentinhaber: Bundesdruckerei GmbH, 10969 Berlin (DE)
(72) Erfinder: Langgaßner, Michael, 81245 München (DE); Richter, Werner, 80999 München (DE)
(74) Vertreter: Hentrich Patent- & Rechtsanwaltspartnerschaft mbB

(56) Entgegenhaltungen:
- DE-A1- 102010 014 305
- KR-B1- 102 001 019
- ANONYMOUS: "Apparatus and method for replicating holograms in a recording film", RESEARCH DISCLOSURE, KENNETH MASON PUBLICATIONS, HAMPSHIRE, UK, GB, vol. 404, no. 2, 1 December 1997 (1997-12-01), XP007122187, ISSN: 0374-4353

## Beschreibung

Die Erfindung betrifft Belichtungstisch für eine Hologrammbelichtungsmaschine, mit einer Halteeinrichtung, in der eine Masteraufnahme ausgebildet oder vorhanden ist, die ausgestaltet ist, einen Master aufzunehmen, und mit einer Filmführung, die ausgebildet ist, einen Hologrammfilm relativ bezüglich der Halteeinrichtung zu führen und einen zu belichtenden Filmabschnitt in einem Belichtungsbereich relativ bezüglich des Masters für eine Hologrammbelichtung zu positionieren. Die Erfindung betrifft außerdem ein Verfahren zum Einbringen eines Volumenreflexionshologramms in einen Filmabschnitt eines Hologrammfilms.

Aus dem Stand der Technik ist es bekannt, Hologramme als Sicherheitselemente in Sicherheitsdokumente oder Wertdokumente zu integrieren. Sicherheitselemente sind solche Entitäten, welche mindestens ein Merkmal aufweisen, welches ein unautorisiertes Duplizieren, Nachahmen und/oder Verfälschen eines Gegenstands erschwert, in welchen das Sicherheitselement integriert ist. Hologramme werden als Sicherheitselemente beispielsweise in Reisepässen oder Personalausweisen verwendet. Sie werden jedoch auch in Banknoten, Führerscheinen, Visa, anderen Wertzeichen, Etiketten oder Tickets, Kreditkarten, Bankkarten, Telefonkarten oder Ähnlichem eingesetzt.

Eine besondere Gruppe von Hologrammen stellen Volumenhologramme dar. Bei einem Volumenhologramm ist eine beugende Struktur des Hologramms im Volumen des holografischen Aufzeichnungsmaterials gespeichert, wie beispielsweise den Druckschriften DE 10 2012 215 540 A1, DE 10 2007 042 385 A1 und DE 10 2007 042 386 A1 zu entnehmen ist. Als Aufzeichnungsmaterialien für Volumenhologramme werden in Wert- und/oder Sicherheitsdokumenten in der Regel holografische Belichtungsfilme eingesetzt, die zumeist auf Rollen bereitgestellt werden. Diese Belichtungsfilme sind geeignet, Interferenzstrukturen zu speichern, deren charakteristische Abmessungen im Bereich der Lichtwellenlänge des Lichts liegen, welches zur Aufzeichnung bzw. Rekonstruktion des Hologramms verwendet wird.

Bei einem Kontaktkopierverfahren wird der holografische Belichtungsfilm vor einem Master angeordnet, in dem beugende Strukturen ausgebildet sind, die in den holografischen Belichtungsfilm "übertragen" werden sollen. Die beugenden Strukturen des Masters werden beim Kontaktkopierverfahren somit in den holografischen Film kopiert. Hierfür wird kohärentes Licht durch den holografischen Film, der in unmittelbarer Nähe vor dem Master oder in Kontakt mit dem Master vor diesem angeordnet ist, auf den Master gestrahlt. Die beugenden Strukturen in dem Master beugen das Licht so, dass das gebeugte Licht in den holografischen Film zurückgestrahlt wird. Dort interferiert dieses mit dem kohärenten Licht, welches zur Beleuchtung des Masters genutzt wird. **In** dem holografischen Film bildet sich somit eine Interferenzstruktur aus, welche durch das an dem Master gebeugte Licht festgelegt ist. Wird der holografische Film entwickelt und rekonstruiert, so gleicht die Rekonstruktion der, die beim Beleuchten des Masters zu beobachten ist. In dem holografischen Film wird ein Hologramm gespeichert, welches auch als Denisjuk-Hologramm bezeichnet wird und ein Volumenreflexionshologramm ist. Es versteht sich, dass das eingestrahlte Licht eine geeignete Wellenlänge (oder geeignete Wellenlängen) und eine geeignete Einstrahlrichtung (oder geeignete Einstrahlrichtungen) aufweisen muss, so dass eine Beugung an der Beugungsstruktur in der gewünschten Weise erfolgt. Ein Verfahren zur Herstellung eines Masters und ein Kontaktkopierverfahren sind der EP 0 896 260 A2 zu entnehmen.

Die holografischen Merkmale auf dem Belichtungsfilm können nicht oder nur fehlerhaft im Filmmaterial "gespeichert" werden, wenn der Hologrammfilm während seiner Belichtung nicht vollständig plan, blasen- sowie knitterfrei gegenüber dem Master positioniert ist. Durch Blasen oder Knitterstellen können bei einer Belichtung des Films unerwünschte Reflexionen auftreten.

Zudem ist es zur Belichtung unterschiedlicher Hologramme erforderlich, dass auch unterschiedliche Master bereitgehalten werden, sodass häufig sehr lange Rüstzeiten für die Umrüstung einer Belichtungsmaschine erforderlich sind, um ein zweites Hologramm in den Hologrammfilm einzubelichten. Dies ist umso schwerer, wenn die Belichtungsmaschine dazu genutzt werden soll, Hologramme für unterschiedliche Kartenformate, wie beispielsweise ID-1-, ID-2- oder ID-3-Formate mit Hologrammen zu versehen.

Die DE 10 2010 014305 A1 beschreibt ein Verfahren und eine Vorrichtung zum Herstellen von Kontaktkopien von Reflektions-Volumenhologrammen. Hierbei wird ein holographischer Film von einer Trommel geführt, wobei er mit mindestens einem Hologrammmaster in Kontakt gebracht und belichtet wird.

In ANONYMOUS: "Apparatus and method for replicating holograms in a recording film", RESEARCH DISCLOSURE, KENNETH MASON PUBLICATIONS, HAMPSHIRE, UK, GB, Bd. 404, Nr. 2, 1. Dezember 1997 (1997-12-01), XP007122187, ISSN: 0374-4353 werden eine Vorrichtung und ein Verfahren zum Reproduzieren von Hologrammen in einem Aufzeichnungsfilm beschrieben.

Die Druckschrift KR 102 001 019 B1 bezieht sich auf eine Hologramm-Übertragungsvorrichtung, die selektiv ein Transmissionshologramm und ein Reflexionshologramm mit einer einzigen Vorrichtung belichten kann, wobei sich der Rekonstruktionswinkel leicht einstellen lässt.

Es ist daher die Aufgabe der vorliegenden Erfindung, einen Belichtungstisch und ein Verfahren zum Einbringen eines Volumenreflexionshologramms in einen Filmabschnitt anzugeben, die zumindest einem der vorstehend erwähnten Nachteilen Rechnung tragen.

Diese Aufgabe wird mit einem Belichtungstisch mit dem Merkmalsbestand des Anspruchs 1 und mit einem Verfahren mit dem Merkmalsbestand des Anspruchs 8 gelöst. Vorteilhafte Ausgestaltungen mit zweckmäßigen Weiterbildungen der Erfindung sind in den abhängigen Ansprüchen angegeben.

Der Belichtungstisch weist dabei insbesondere die Halteeinrichtung auf, welche als ein Revolver mit einer Mehrzahl an radial orientierten Masteraufnahmen gebildet ist, der senkrecht bezüglich der optischen Achse der Hologrammbelichtung rotierbar gelagert ist. Damit lässt sich selektiv der für die Hologrammbelichtung erforderliche Master mit seiner Masteraufnahme im Belichtungsbereich anordnen. Außerdem ist mit dieser Konfiguration der Vorteil verbunden, dass eine Mehrzahl an Mastern bei ein- und demselben Belichtungstisch durch die Halteeinrichtung bereitgestellt wird. Die als Revolver geformte Halteeinrichtung bietet dabei eine einfache Möglichkeit, um unterschiedliche Volumenreflexionshologramme - auch unterschiedliche Formate derselben - in einen Filmabschnitt eines Hologrammfilms einzubringen, welcher sich in dem Belichtungsbereich befindet.

Ein vereinfachter Masterwechsel für eine Hologrammbelichtung ist von Vorteil. Aus diesem Grunde ist die Möglichkeit eröffnet, dass der Revolver eine Platte umfasst, von der sich senkrecht die Masteraufnahmen erstrecken. Dieser Platte ist dabei eine Drehlagerung zugeordnet, wodurch die Platte um eine senkrecht zur Plattenoberfläche orientierte Achse drehbar gelagert ist. Typischerweise ist die Achse dabei senkrecht zur optischen Achse der Hologrammbelichtung ausgerichtet.

Da die Master des Revolvers unterschiedliche Abmessungen aufweisen können, ist die Gewichtsverteilung des Revolvers geeignet anzupassen. **In** diesem Zusammenhang ist es von Vorteil, wenn die Masteraufnahmen an einem Masterabschnitt des Umfangs der Platte verteilt angeordnet sind, und wenn an einem zum Masterabschnitt komplementären Abschnitt des Umfangs der Platte des Revolvers ein Gegengewicht vorhanden ist.

Es ist zu gewährleisten, dass Material und Kosten eingespart werden können. Erfindungsgemäß ist bei der Platte des Revolvers eine Einrichtung zur Festlegung der Revolverdrehlage vorhanden, welche durch eine zur Anzahl der Masteraufnahmen korrespondierende Anzahl an Rastsitzen sowie durch mindestens ein Rastglied gebildet ist, und wenn das Rastglied verstellbar ist zwischen einer aus den Rastsitzen ausgerückten, die Drehung des Revolvers ermöglichenden Stellung und einer in einen der Rastsitze eingerückten, die Drehung des Revolvers unterbindenden Stellung. Durch diese Einrichtung zur Festlegung der Revolverdrehlage lassen sich selektiv die gewünschten Master im Belichtungsbereich positionieren, um die dem jeweiligen Master zugeordneten Strukturen in den Hologrammfilm zu kopieren. Durch das Verstellen des Rastgliedes ist also die Drehbewegung des Revolvers ermöglicht, sodass auf schnelle und positionsgenaue Weise, ein Masterwechsel vorgenommen werden kann. Die Verstellung des Rastgliedes kann entweder manuell, pneumatisch oder auch elektromotorisch erfolgen. Auch die Drehung des Revolvers kann manuell, pneumatisch oder elektromotorisch erfolgen.

Der Belichtungstisch für eine Hologrammbelichtungsmaschine umfasst vorzugsweise eine der als Revolver gebildeten Halteeinrichtung zugeordnete Drucklufteinrichtung, die ausgebildet ist, den Filmabschnitt mittels eines Unterdrucks an dem in der Halteeinrichtung aufgenommenen, sich im Belichtungsbereich befindlichen Master zumindest zeitweise zu fixieren. Mit einem solchen Unterdruck ist gewährleistet, dass der Filmabschnitt plan und insbesondere frei von Gaseinschlüssen gegenüber dem Master fixiert wird, wodurch sich die Ausschussrate von belichteten Hologrammen deutlich reduzieren lässt. Zusätzlich wird der Filmabschnitt vollständig plan, blasen- und knitterfrei, insbesondere bewegungslos oder optisch stabil gegenüber dem sich im Belichtungsbereich befindenden Master positioniert, womit Volumenreflexionshologramme betriebssicher in den Hologrammfilm einkopiert werden können.

Der Master einer Hologrammbelichtungsmaschine ist typischerweise aus einem Material geformt, welches umfangseitig scharfe Kanten aufweisen kann. Diese Kanten können zu Kratzern am Hologrammfilm beim Transport desselben über dem Master und über der Halteeinrichtung führen. Um diesem Problem zu begegnen, ist die Drucklufteinrichtung vorzugsweise ausgebildet, zumindest zeitweise einen Überdruck derart bereitzustellen, dass der Transport des Hologrammfilms relativ bezüglich des Masters von einem Luftpolster gestützt erfolgt. In anderen Worten ist die Drucklufteinrichtung also ausgebildet, eine Blasluft bereitzustellen, die den Hologrammfilm auf seiner dem Master zugewandten Seite mit Druckluft beaufschlagt, sodass Beschädigungen des Filmes wirksam vermieden werden.

Zur sicheren Fixierung des Filmabschnittes an dem sich im Belichtungsbereich befindlichen Master während der Belichtung, hat es sich als vorteilhaft erwiesen, wenn die Drucklufteinrichtung aus einer Mehrzahl an Gasdurchtrittsanordnungen gebildet ist, wenn jeder Masteraufnahme oder dem entsprechenden darin aufgenommenen Master mindestens eine der Gasdurchtrittsanordnungen zugewiesen ist, und wenn die Drucklufteinrichtung mindestens einen Kanal umfasst, der ausschließlich mit der mindestens einen sich im Belichtungsbereich befindlichen Gasdurchtrittsanordnung strömungsmechanisch verbunden ist. **In** anderen Worten ist der Kanal also gegenüber den sich nicht im Belichtungsbereich befindlichen Masteraufnahmen und/oder den jeweiligen darin aufgenommenen Master abgedichtet. Die Platte mit ihren Gasdurchtrittsanordnungen und der Kanal der Drucklufteinrichtungen bilden dabei also eine Art Mehrwegventil aus, das derart ausgebildet ist, jeweils lediglich mit demjenigen Master oder derjenigen Masteraufnahme strömungsmechanisch verbunden zu sein, die sich im Belichtungsbereich befinden.

Eine zuverlässige Anlage des Filmabschnitts am Master ist dadurch geschaffen, dass die Gasdurchtrittsanordnung den Master umfangseitig rahmt, und dass die Gasdurchtrittsanordnung durch einen Schlitz oder durch eine mehrere Bohrungen umfassende Bohrungsanordnung (Bohrungsarray) gebildet ist.

Da ein Vakuum mit Druckluft häufig auf einfachere Weise zur Verfügung gestellt werden kann als ein mit einer Vakuumpumpe erzeugtes Vakuum, hat es sich als vorteilhaft erwiesen, wenn die Drucklufteinrichtung eine pneumatische Venturisaugdüse zur Erzeugung des Unterdrucks umfasst. Somit kann mit dem so gebildeten Vakuumejektor auf einfache Weise komprimierte Druckluft in den Ejektor eingeleitet werden, die an einer mit einer Querschnittsverengung versehenen Treibdüse (Venturi-Düse) beschleunigt wird. Dabei steigt der dynamische Druck an und der statische Druck der Luft sinkt. Nach dem Passieren der Treibdüse entspannt sich die beschleunigte Luft und ein Vakuum entsteht, wobei zusätzlich Luft durch den mit der Gasdurchtrittsanordnung strömungsmechanisch verbundenen Vakuum-Anschluss in den Ejektor gesaugt wird, die zusammen mit der angesaugten Luft durch den Schalldämpfer aus dem Ejektor austritt. Damit ist eine einfache Variante der Drucklufteinrichtung geschaffen, um wahlweise - ggfs. in Abhängigkeit einer geeigneten Stellung von Ventilen - umfangseitig am Master einen Unterdruck oder einen Überdruck bereitzustellen.

Um vor einer Belichtung des Hologramms zu gewährleisten, dass auch die etwaig vorhandenen letzten Gaseinschlüsse zwischen dem zu belichteten Filmabschnitt des Hologrammfilms und dem sich im Belichtungsbereich befindlichen Master beseitigt werden, hat es sich als vorteilhaft erwiesen, wenn eine Aufstreifeinrichtung vorhanden ist, um den zu belichteten Filmabschnitt auf den Master aufzustreifen.

Dabei ist die vorteilhafte Möglichkeit eröffnet, dass die Aufstreifeinrichtung einen zwischen zwei Anschlägen verschiebbaren Schlitten umfasst, an welchem eine auf einer Drehachse drehbar gelagerte und mit dem Filmabschnitt wechselwirkende Anpressrolle gelagert ist. Diese Anpressrolle kann also über den Filmabschnitt gerollt werden und trägt dabei etwaige Gaseinschlüsse zwischen dem Master und dem Hologrammfilm aus. Dabei ist außerdem die vorteilhafte Möglichkeit geschaffen, dass die Aufstreifeinrichtung alternierend, d.h. einerseits in einer Richtung filmaufwärts des Masters beginnend und andererseits filmabwärts des Masters beginnend, über den Filmabschnitt gerollt werden kann.

Um einen möglichst reibungslosen Transport des Hologrammfilms zu ermöglichen, ist es von Vorteil, wenn der Schlitten um eine senkrecht bezüglich der Drehachse der Anpressrolle orientierte Verfahrachse begrenzt verschwenkbar gelagert und damit die Anpressrolle zwischen einer angehobenen Stellung und einer abgesenkten Stellung verstellbar ist. **In** diesem Zusammenhang ist dabei die Möglichkeit vorhanden, dass insbesondere anschlagsnah oder am jeweiligen Anschlag jeweils eine Steuerkurve vorhanden ist, die ausgebildet ist, die Anpressrolle zwischen der angehobenen Stellung und der abgesenkten Stellung zu verstellen.

Zur Einstellung oder Variation der von der Anpressrolle ausgeübten Kraft auf den Filmabschnitt ist es sinnvoll, wenn dem Schlitten auf seiner dem Master abgewandten Seite eine Federanordnung zugeordnet ist, die den Anpressdruck der Anpressrolle auf den Master oder auf den sich am Master befindenden Filmabschnitt einstellt oder vorgibt. Die Andruckkraft der Anpressrolle wird dabei über das Moment der Federkraft um die Verfahrachse bestimmt.

Um Toleranzschwankungen ausgleichen zu können, um also in anderen Worten Ausgleichsbewegungen für die Anpressrolle bereitzustellen, ist es möglich, dass die Anpressrolle selbst an einem Haltearm drehbar gelagert ist, der mittels einer senkrecht zur Drehachse der Anpressrolle orientierten Schwenkachse derart am Schlitten fixiert ist, dass der Haltearm und damit die Anpressrolle begrenzt verschwenkbar gegenüber dem Schlitten gelagert sind.

Um zu gewährleisten, dass der Hologrammfilm beim Transport weder an der Halteeinrichtung noch an dem in der Halteeinrichtung aufgenommenen Master streift, hat es sich als sinnvoll erwiesen, wenn die Filmtransporteinrichtung eine Filmhubeinrichtung umfasst, die zwischen einer angehobenen, einer Transportkonfiguration entsprechenden Stellung und einer abgesenkten, einer Belichtungskonfiguration entsprechenden Stellung verstellbar ist. Mit dieser Ausgestaltung ist zusätzlich die Möglichkeit eröffnet, dass der Hologrammfilm vor oder bei seinem Fixieren derart gegenüber dem Master gehalten wird, dass die Oberfläche des zu belichtenden Filmabschnitts und die Oberfläche des Masters unter einem spitzen Winkel aufeinander zu oder voneinander weg verlaufend orientiert sind. Durch eine solche "Rampe" bzw. durch einen solchen fiktiven "Keil" lassen sich bei der anschließenden Fixierung mittels der Saugluft hinreichend gut Luftblasen austreiben oder etwaige andere Gaseinschlüsse vermeiden, da diese vom spitzen Winkel weggedrückt werden, insbesondere in denjenigen Fällen, in denen zusätzlich eine Aufstreifeinrichtung zur Fixierung des Filmabschnitts am Master genutzt wird. Um einen derartigen "Keil" sowohl in als auch entgegen der Filmtransportrichtung bereitstellen zu können, ist zudem die Möglichkeit gegeben, dass die Transporteinrichtung eine zweite Filmhubeinrichtung umfasst, die zwischen einer angehobenen, einer Transportkonfiguration entsprechenden Stellung und einer abgesenkten, einer Belichtungskonfiguration entsprechenden Stellung verstellbar ist.

Um den Transport des Hologrammfilms so reibungslos als möglich zu gestalten, ist es von Vorteil, wenn die erste Filmhubeinrichtung und/oder die zweite Filmhubeinrichtung eine um eine Achse drehbare Filmhubwalze umfasst. Mit der Filmhubwalze kann der Hologrammfilm angehoben oder abgesenkt werden.

Zur verbesserten Führung, insbesondere zum verbesserten Halten des Hologrammfilms, ist es von Vorteil, wenn die erste Filmhubeinrichtung und/oder die zweite Filmhubeinrichtung eine zur Filmhubwalze achsparallel angeordnete Führungswalze umfasst, die jeweils an einem begrenzt um die Achse verschwenkbaren Hebelarm drehbar gelagert ist.

Bei der Belichtung des Hologrammfilms ist es erforderlich und wünschenswert, dass der Hologrammfilm staubfrei ist. Aus diesem Grund ist es von Vorteil, wenn eine Reinigungseinrichtung vorhanden ist, die ausgebildet ist, den zu belichtenden Filmabschnitt des Hologrammfilms, insbesondere schon während dessen Transports, mit ionisierter Luft auf seiner dem Master zugewandten Seite zu besprühen. Dies dient auch der statischen Entladung des Films.

Diese ionisierte Luft kann ebenfalls zur Bereitstellung eines Luftpolsters während des Transports genutzt werden, wozu die Reinigungseinrichtung insbesondere eine zumindest teilweise, vorzugsweise aber überwiegend in einer Filmtransportrichtung orientierte erste Sprühdüse für ionisierte Luft umfasst und wobei die Reinigungseinrichtung eine zumindest teilweise, vorzugsweise überwiegend entgegen der Filmtransportrichtung orientierte zweite Sprühdüse für ionisierte Luft umfasst.

Für einen kompakten, symmetrischen Aufbau des Belichtungstisches ist es dabei vorteilhaft, wenn die erste Sprühdüse filmaufwärts bezüglich der Halteeinrichtung angeordnet ist, und wenn die zweite Sprühdüse filmabwärts bezüglich der Halteeinrichtung angeordnet ist.

Die im Zusammenhang mit dem erfindungsgemäßen Belichtungstisch erläuterten Vorteile und vorteilhaften Ausgestaltungen gelten gleichermaßen auch für das erfindungsgemäße Verfahren. Dieses umfasst insbesondere die folgenden Schritte:
- Verdrehen einer Halteeinrichtung mit einer Mehrzahl an Masteraufnahmen soweit, bis sich ein für die Hologrammbelichtung gewünschter Master in einem Belichtungsbereich befindet,
- Transportieren des zu belichtenden Filmabschnitts in den Belichtungsbereich mittels einer Filmtransporteinrichtung,
- zeitgleiches oder nachfolgendes Anheben des Hologrammfilms mittels einer Filmhubeinrichtung und bilden eines spitzen Winkels zwischen den sich zugewandten Oberflächen von Filmabschnitt und Master,
- Aufstreifen des Filmabschnitts auf den Master ausgehend vom spitzen Winkel mittels einer Anpressrolle, und
- Belichten des Hologramms in dem Filmabschnitt.

Mit diesem Verfahren ist der Vorteil verbunden, dass sich selektiv der für die Hologrammbelichtung gewünschte Master durch Verdrehen der Halteeinrichtung im Belichtungsbereich positionieren lässt, wobei zugleich eine blasenfreie Fixierung des zu belichtenden Hologrammfilms vorliegt. Dies reduziert eine etwaige Ausschussrate drastisch.

Es ist von Vorteil, wenn vor und/oder während des Aufstreifens ein Unterdruck an oder um den Master bereitgestellt wird, womit der Filmabschnitt an den Master gesaugt wird, und wenn die Anpressrolle ein zweites Mal über den Filmabschnitt gerollt wird, bevor der Hologrammfilm belichtet wird. Dies gewährleistet eine sichere Anlage des Filmabschnitts am Master, wobei durch das doppelte Überstreichen des Filmabschnitts die Anzahl potentieller Gaseinschlüsse zwischen Hologrammfilm und Master minimiert, insbesondere auf null herabgesetzt, wird.

Um Eigenbewegungen des Hologrammfilms, insbesondere das Hervorrufen von Newton-Ringen, zu vermeiden, ist es von Vorteil, wenn der Unterdruck reduziert wird, bevor oder während die Belichtung erfolgt. Vorzugsweise wird der Hologrammfilm drucklos gegenüber dem Master angeordnet, wenn die Belichtung erfolgt.

Die vorliegende Erfindung wird nachfolgend anhand von Figuren näher erläutert, wobei die dargestellten Beispiele lediglich exemplarischen Charakter haben und keine Einschränkung hinsichtlich der Tragweite der beschriebenen Erfindung darstellen. Es zeigen im Einzelnen:
- Figur 1: eine schematische Darstellung einer Belichtungsmaschine zur Belichtung eines Volumenreflexionshologramms in einem Hologrammfilm,
- Figur 2: eine Seitenansicht auf einen Belichtungstisch mit der Anpressrolle in rechter Endlage,
- Figur 3: eine weitere, Figur 2 entsprechende Ansicht mit der Anpressrolle in linker Endlage (Zwischenlage), und
- Figur 4: eine weitere, Figur 2 entsprechende Ansicht mit der Anpressrolle in ihrer rechten Ausgangslage und abgesenkter Filmhubeinrichtung für die Belichtung.

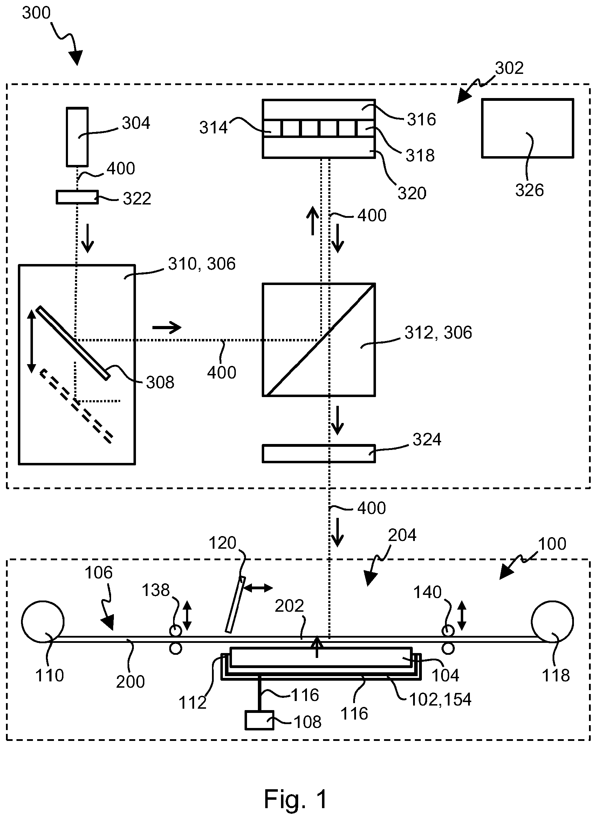

**In** Figur 1 ist schematisch eine Hologrammbelichtungsmaschine 300 zum Belichten von Hologrammen in einem Hologrammfilm 200 gezeigt. Eine solche Hologrammbelichtungsmaschine 300 wird auch als Holobelichter bezeichnet.

Die Hologrammbelichtungsmaschine 300 umfasst eine in der Zeichnung oben dargestellte Belichtungseinrichtung 302 und einen in der Zeichnung unten dargestellten Belichtungstisch 100.

Die Belichtung von Hologrammen erfolgt mittels kohärentem Licht. Hierfür weist die Belichtungeinrichtung 302 eine Lichtquelle 304 auf, welche vorliegend als ein cw-Laser ausgebildet ist. Vorliegend steht "cw" für "continuous wave" und bedeutet "zeitlich konstant abgestrahlte Welle". Es ist die Möglichkeit gegeben, dass es sich bei der Lichtquelle 304 um einen gepulsten Laser handelt. Das Licht 400 der als Laser ausgebildeten Lichtquelle 304 weist einen ersten Polarisationszustand auf. Zum Führen des Lichts 400 wird eine Strahlführungsoptik 306 verwendet. Das Licht der Lichtquelle 304 wird bei der dargestellten Belichtungseinrichtung 302 zunächst, ggfs. unter Zuhilfenahme einer Strahlformungseinrichtung 322 zur insbesondere in einer Raumrichtung orientierten Strahlaufweitung, auf eine Ablenk- und Scanvorrichtung 310 der Strahlführungsoptik 306 geführt. Diese Ablenk- und Scanvorrichtung 310 umfasst einen Galvanometerscanner und einen mit dem Galvanometerscanner gekoppelten Spiegel 308, an dem das einfallende Licht 400 umgelenkt wird. **In** einer ersten Stellung ist der Spiegel 308 mittels einer durchgezogenen Linie dargestellt, wobei er in einer zweiten Stellung strichliert gezeigt ist. Durch das Verschieben des Spiegels 308 kann eine einem "Scan", insbesondere einem Linienscan entsprechende Belichtung des Hologramms erfolgen. **In** anderen Worten wird der Hologrammfilm 200 zur Belichtung des Hologramms "abgetastet". Anders geartete Ablenk- und Scanvorrichtungen 310 für das Licht 400 sind ebenfalls einsetzbar.

Das abgelenkte Licht 400 wird auf einen polarisationsabhängigen Strahlteilerwürfel 312 der Strahlführungsoptik 306 geführt. Dieser ist aus einem ersten Prisma und einem zweiten Prisma gebildet, an deren Grenzfläche eine polarisationsabhängige Strahlteilung erfolgt. Anstelle von Prismen kann auch eine Strahlteilerplatte Einsatz finden. Licht 400 des ersten Polarisationszustands wird an dieser Grenzfläche abgelenkt. Licht eines weiteren, zu dem ersten Polarisationszustand orthogonalen Polarisationszustands kann hingegen durch die Grenzfläche hindurchtreten.

Das an der Grenzfläche des polarisationsabhängigen Strahlteilerwürfels 312 abgelenkte Licht 400 wird auf einen räumlichen Lichtmodulator 314 gelenkt, der als sogenannter Liquid-Crystal-on-Silicon-Lichtmodulator (LCoS) ausgebildet ist. Der Lichtmodulator 314 umfasst eine Siliziumschicht 316, an der auftreffendes Licht 400 reflektiert wird. Auf dieser Siliziumschicht 316 sind vorliegend elektronische Schaltelemente ausgebildet, die zum Schalten von Flüssigkristallzellen 318 verwendet werden, die vor der zur Reflexion genutzten Oberfläche der Siliziumschicht 316 angeordnet sind. Die einzelnen Flüssigkristallzellen 318 können individuell in unterschiedliche Schaltzustände versetzt werden. Typischerweise liegt ein Array an Flüssigkristallzellen 318 vor, so dass aus der Papierebene heraus oder in diese hinein versetzt weitere Reihen an Flüssigkristallzellen 318 vorliegen. Abhängig von dem jeweiligen Schaltzustand der Flüssigkristallzellen 318 wird ein Polarisationszustand des durchtretenden Lichts 400 geändert oder nicht geändert, wodurch das Licht 400 räumlich moduliert wird. Vereinfachend wird hier angenommen, dass in einem ersten Schaltzustand das in einem ersten Polarisationszustand auf den Lichtmodulator 314 auftreffende Licht 400 beim Durchtritt durch eine Flüssigkristallzelle 318, welche aufgrund der Reflexion an der Oberfläche der Siliziumschicht 316 zweimal durchlaufen wird, insgesamt hinsichtlich der Polarisation so verändert wird, dass das Licht 400 anschließend in dem zu dem ersten Polarisationszustand orthogonalen weiteren Polarisationszustand polarisiert ist. Dieses hinsichtlich der Polarisation modulierte Licht 400 tritt durch eine transparente Schutzscheibe 320 des räumlichen Lichtmodulators 314, wobei insbesondere eine Austrittsfläche der Schutzscheibe 320 parallel zu der Reflexionsoberfläche der Siliziumschicht 316 orientiert ist. Die Oberflächennormale des Lichtmodulators 314 ist somit orthogonal sowohl zu der Austrittsfläche der Schutzscheibe 320 als auch zu der reflektierenden Oberfläche der Siliziumschicht 316.

Das modulierte Licht trifft nach dem Austreten aus dem Lichtmodulator 314 erneut auf dem polarisationsabhängigen Strahlteiler 312 auf, wobei das vom LCoS zurückreflektierte modulierte Licht 400 abhängig von seinem Polarisationszustand die Grenzfläche des Strahlteilers 312 passieren kann oder nicht. Ist das modulierte Licht 400, wie im exemplarisch dargestellten Fall, aufgrund des ersten Schaltzustands der Flüssigkristallzelle in den zu dem ersten Polarisationszustand orthogonalen weiteren Polarisationszustand überführt worden, so kann dieses die Grenzfläche des polarisationsabhängigen Strahlteilerwürfels 312 passieren, womit es, ggfs. unter Zuhilfenahme eines Polarisationsfilters 324, weiter in Richtung des Belichtungstisches 100, insbesondere in einen Belichtungsbereich 204 geleitet wird. Anteile des Lichts 400, die sich nach wie vor in dem ersten Polarisationszustand befinden und an dem polarisationsabhängigen Strahlteilerwürfel 312 ankommen, werden an dessen Grenzfläche abgelenkt und gelangen daher nicht weiter in Richtung des sich unter der Belichtungseinrichtung 302 befindlichen Belichtungstisches 100. Durch den polarisationsabhängigen Strahlteilerwürfel 312 wird somit das Licht 400 abhängig von dem aufmodulierten Polarisationszustand räumlich hinsichtlich der Intensität moduliert.

Bei der Beschreibung der Belichtungseinrichtung 302 wurde bis hierher davon ausgegangen, dass der räumliche Lichtmodulator 314 den Polarisationszustand des Lichts um 90 Grad dreht oder unverändert lässt. Es sind jedoch auch Änderungen möglich, die eine Drehung der Polarisationsrichtung zwischen 0 Grad und 90 Grad bewirken. Alle diese Drehungen führen dazu, dass das Licht eine veränderte Amplitude und damit eine veränderten Intensität des weiteren Polarisationszustands aufweist. Je nach Drehwinkel, variieren diese und nehmen mit dem Betrag der Drehung zwischen 0 Grad und 90 Grad zu. Hierdurch ist es möglich "Graustufen" zu belichten.

Der Belichtungstisch 100 weist eine Halteeinrichtung 102 auf, in welcher ein Master 104 aufgenommen ist. Der Master 104 umfasst einen Träger, welcher in der Regel aus Glas oder einem anderen Werkstoff gebildet ist. Auch andere Trägermaterialien sind möglich, beispielsweise Metalle. Auf den Träger ist vorzugsweise mindestens eine optisch aktive Schicht, beispielsweise eine Beugungsschicht, aufgebracht, welche eine zu kopierende Beugungsstruktur umfasst. Vorliegend umfasst die Beugungsschicht des Masters 104 ein Volumenreflexionshologramm, welches kopiert werden soll.

Es ist zu erkennen, dass die Belichtungsmaschine 300, insbesondere der Belichtungstisch 100 eine Filmtransporteinrichtung 106 umfasst, die ausgebildet ist, den Hologrammfilm 200 relativ bezüglich der Halteeinrichtung 102 und damit relativ zu dem sich im Belichtungsbereich 204 befindlichen Master 104 zu transportieren. Eine Filmführung bildet dabei einen Teil der Filmtransporteinrichtung 106. Die Filmtransporteinrichtung 106 ist also für ein Aufnehmen des holografischen Films und Halten und/oder Führen des Films während der Belichtung des Hologramms vorgesehen. Bei der dargestellten Belichtungsmaschine 300 umfasst die Filmtransporteinrichtung 106 eine Filmrolle 110, auf der der Hologrammfilm 200 bereitgestellt wird. Dieser wird nach dem Belichten auf einer weiteren Filmrolle 118 aufgewickelt. Gegebenenfalls durchläuft der belichtete Hologrammfilm 200 eine Strecke zur Entwicklung des Hologramms, durch welche thermisch auf den Hologrammfilm 200 eingewirkt wird, um das Hologramm im Film zu entwickeln, bevor der belichtete Hologrammfilm 200 auf der weiteren Filmrolle 118 wieder aufgewickelt wird. Der Hologrammfilm 200 wird jedenfalls in typischer Weise mittels Filmführungsrollen geführt. Es ist zu erkennen, dass sich der Hologrammfilm 200 über den Bereich des Masters 104 hinweg erstreckt, womit die Filmtransporteinrichtung 106 in anderen Worten also ausgebildet ist, einen zu belichtenden Filmabschnitt 202 relativ bezüglich des Masters 104 zu positionieren. **In** diesen Filmabschnitt 202 wird das Volumenreflexionshologramm belichtet, mithin einkopiert. Um eine betriebssichere Belichtung des Hologramms zu erzielen, liegt der Hologrammfilm 200 während des Belichtungsvorgangs an dem Master 104 an. Durch diese Anlage lassen sich Eigenbewegungen des holografischen Films unterdrücken, was die erzielbare Beugungseffizienz des hergestellten Hologramms steigert.

Bei der Belichtung tritt das modulierte Licht 400, welches den weiteren Polarisationszustand aufweist, durch den zu belichtenden Filmabschnitt 202 des Hologrammfilms 200 hindurch und wird an der optisch aktiven Struktur der mindestens einen optisch aktiven Schicht des Masters 104 zurückgelenkt, z.B. bei einer als Beugungsschicht ausgebildeten optisch aktiven Schicht gebeugt. Das zurückgestrahlte Licht (nicht dargestellt) interferiert dann in dem Hologrammfilm 200 mit dem von dem Lichtmodulator 314 kommenden modulierten Licht 400. Hierdurch wird die optisch aktive Struktur, z.B. die beugende Struktur, des Masters 104 in den Hologrammfilm 200 einbelichtet. Hierbei wird die optisch aktive Struktur pixelweise abhängig von der räumlichen Modulation entweder belichtet und kopiert oder andererseits nicht belichtet und somit auch nicht kopiert. Es entsteht somit eine Kopie der optisch aktiven Struktur, beispielsweise eine Kopie eines Volumenreflexionshologramms einer Mattscheibe.

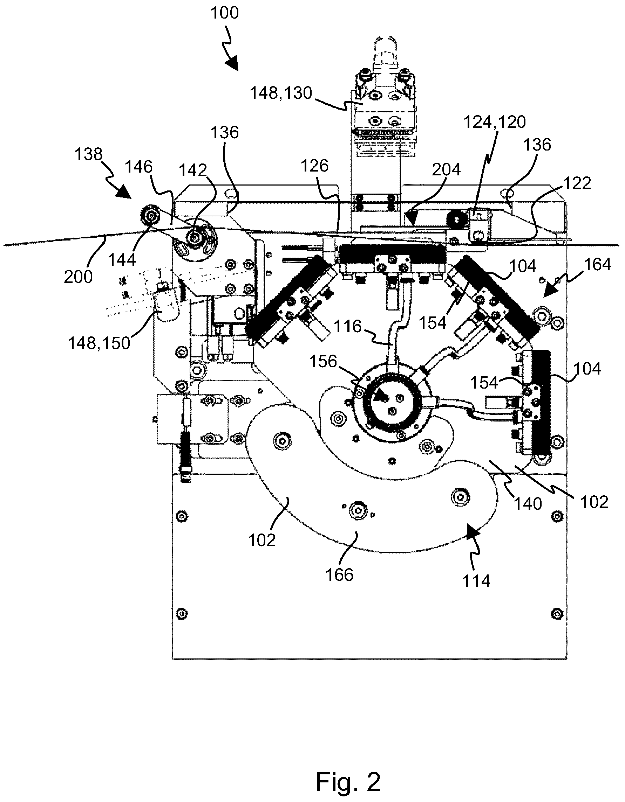

Die vorliegende Erfindung betrifft die Gestaltung und die Betriebsweise des Belichtungstisches 100, der in den Figuren 2 bis 4 in einer Seitenansicht näher zu erkennen ist. Die hierbei gezeigte Halteeinrichtung 102 ist nach Art eines Revolvers 114 gestaltet und weist insgesamt vier Aufnahmen für einen Master 104 auf. Eine andere Anzahl an Masteraufnahmen 154 ist möglich, sodass auch weniger oder mehr als vier der Master 104 auf ein- und derselben Halteeinrichtung 102 angeordnet werden können. Um die sehr empfindlichen Kanten des Masters 104 zu schützen, ist jede Aufnahme der als Revolver 114 gebildeten Halteeinrichtung 102 derart ausgestaltet, dass der jeweilige Master 104 gegenüber der Halteeinrichtung 102 bzw. deren Masteraufnahme 154 versenkt angeordnet ist oder mit letzteren höchstens in einer gemeinsame Ebene liegt.

Die Halteeinrichtung 102, mithin der Revolver 114 lässt sich mit seiner Mehrzahl an Masteraufnahmen 154 derart ausrichten, dass jeder der Master 104 selektiv in den Belichtungsbereich 204 eingebracht werden kann, so dass in anderen Worten selektiv der für die Hologrammbelichtung erforderliche Master 104 mit seiner Masteraufnahme 154 im Belichtungsbereich 204 angeordnet ist. Der Revolver 114 weist eine Drehlagerung 156 auf womit er um eine senkrechte bezüglich der optischen Achse der Hologrammbelichtung rotierbar gelagert ist.

Es ist zu erkennen, dass der Revolver 114, eine Platte 140 umfasst, von der sich senkrecht die Masteraufnahmen 154 erstrecken und welcher die Drehlagerung 156 zugewiesen ist. Zur geeigneten Gewichtsverteilung sind die Masteraufnahmen 154 an einem Masterabschnitt 164 des Umfangs der Platte 140 verteilt angeordnet sind, wobei an einem zum Masterabschnitt 164 komplementären Abschnitt des Umfangs der Platte 140 ein Gegengewicht 166 vorhanden ist.

Bei dem gezeigten Belichtungstisch 100 ist außerdem eine nicht näher dargestellte Einrichtung zur Festlegung der Revolverdrehlage vorhanden, die beispielsweise einem Plattenrand der Platte 140 zugeordnet ist. Diese Einrichtung zur Festlegung der Revolverdrehlage ist durch eine zur Anzahl der Masteraufnahmen 154 korrespondierende Anzahl an Rastsitzen sowie durch mindestens ein Rastglied gebildet, wobei das Rastglied verstellbar ist zwischen einer aus den Rastsitzen ausgerückten, die Drehung des Revolvers ermöglichenden Stellung und einer in einen der Rastsitze eingerückten, die Drehung des Revolvers unterbindenden Stellung. Die Verstellung des Rastglieds erfolgt beispielsweise druckmittelbetätigt, insbesondere pneumatisch. Eine motorische, insbesondere eine elektromotorische Verstellung ist ebenfalls möglich.

Die Filmtransporteinrichtung 106 umfasst vorliegend eine filmaufwärts des Masters 104 gelegene erste Filmhubeinrichtung 138. Es besteht alternativ oder ergänzend die Möglichkeit, auch eine filmabwärts des Masters 104 gelegene zweite Filmhubeinrichtung vorzusehen (Fig. 1). Jede Filmhubeinrichtung 138 umfasst eine Filmhubwalze 142 und eine Führungswalze 144. Die Filmhubwalze 142 ist achsparallel zur Führungswalze 144 angeordnet. Die Führungswalze 144 ist selbst an einem begrenzt um die Achse der Filmhubwalze 142 verschwenkbaren Hebelarm 146 drehbar gelagert. Hierzu weist dann die betreffende Filmhubeinrichtung 138 entsprechend bogenförmige Langlöcher auf. Die Verstellung des Hebelarms 146 kann dabei druckmittelbetätigt, insbesondere pneumatisch erfolgen. Auch das Heben und Senken der Filmhubeinrichtung 138 erfolgt druckmittelbetätigt, insbesondere pneumatisch. Die Filmhubeinrichtung 138 der Filmtransporteinrichtung 106 gewährleistet während des Transports einen minimalen Abstand zwischen der Halteeinrichtung 102 und dem Hologrammfilm 200, sodass dieser keine Beschädigungen erfährt. Dieser Abstand kann beispielsweise zwischen 0,4 Millimeter und 1,1 Millimeter betragen, wodurch der Belichtungstisch 100 und damit die mit diesem gebildete Belichtungsmaschine 300 sehr platzsparend und kompakt gestaltet sind.

Um Gaseinschlüsse zwischen dem Hologrammfilm 200 und dem Master 104 herausdrücken zu können, ist vorliegend außerdem eine Aufstreifeinrichtung 120 vorhanden um den zu belichtenden Filmabschnitt 202 auf den Master 104 aufzustreifen. Diese Aufstreifeinrichtung 120 ist vorliegend durch einen zwischen zwei Anschlägen verschiebbaren Schlitten 124 gebildet, an dem eine auf einer Drehachse drehbar gelagerte und beim Aufstreifen mit dem Filmabschnitt 202 wechselwirkende Anpressrolle 122 gelagert ist. Dieser Schlitten 124 ist in der Darstellung nach Figur 2 in seiner rechten Endlage vor dem ersten Aufstreifen gezeigt.

Dem Schlitten 124 ist auf seiner dem Master 104 abgewandten Seite eine Federanordnung zugeordnet, die den Anpressdruck der Anpressrolle 122 auf den Master 104 oder auf den sich am Master 104 befindenden Filmabschnitt 202 einstellt oder vorgibt.

Der als Revolver 114 gebildeten Halteeinrichtung 102 ist vorliegend eine Drucklufteinrichtung 108 zugeordnet, die ausgebildet ist, für die Belichtung des Filmabschnitts 202 diesen mittels eines Unterdrucks an dem in der Halteeinrichtung 102 aufgenommenen und sich im Belichtungsbereich 204 befindenden Master 104 zumindest zeitweise zu fixieren. Bei jedem Master 104 in den Masteraufnahmen 154 ist vorliegend ein um den betreffenden Master 104 umfangsseitig angeordneter Schlitz vorhanden, der somit eine Gasdurchtrittsanordnung 112 bildet. Die Gasdurchtrittsanordnung 112 rahmt also den betreffenden Master 104 umfangsseitig und gewährleistet damit ein blasenfreies Anliegen des zu belichtenden Filmabschnitts 202 am Master 104. Vorliegend kann die Drucklufteinrichtung 108 aber zusätzlich dazu genutzt werden, um zeitweise einen Überdruck derart bereitzustellen, dass der Transport des Hologrammfilms 200 relativ bezüglich des Masters 104 im Belichtungsbereich 204 von einem Luftpolster gestützt erfolgt, was Beschädigungen des Hologrammfilms 200 zusätzlich vorbeugt. Die Drucklufteinrichtung 108 umfasst vorliegend mindestens einen Kanal 116, der ausschließlich mit der mindestens einen sich im Belichtungsbereich 204 befindlichen Gasdurchtrittsanordnung 112 strömungsmechanisch verbunden ist. Die Gasdurchtrittsanordnungen 112 der sich nicht im Belichtungsbereich 204 befindenden Masteraufnahmen 154 sind dabei gegenüber dem Kanal 116 der Drucklufteinrichtung 108 abgedichtet und lassen sich nur dann strömungsmechanisch mit dieser verbinden, wenn die betreffende Masteraufnahme 154 durch Verdrehen der als Revolver 114 gebildeten Halteeinrichtung 102 in den Belichtungsbereich 204 verbracht wird. **In** den Figuren ist nicht näher gezeigt, dass zur Erzeugung des erforderlichen Unterdrucks oder Vakuums die Drucklufteinrichtung 108 eine pneumatische Venturisaugdüse umfasst, die mit der betreffenden Gasdurchtrittsanordnung 112 über den einen oder die mehreren Kanäle 116 strömungsmechanisch verbunden und ggfs. in geeigneter Weise mit Ventilen verschaltet ist.

Um den Hologrammfilm 200 vor dem Belichten möglichst staubfrei zu halten und diesen damit vor Kratzern zu schützen, ist vorliegend eine Reinigungseinrichtung 148 vorhanden. Diese Reinigungseinrichtung 148 dient auch der statischen Entladung des Hologrammfilms 200. Die Reinigungseinrichtung 148 umfasst vorliegend eine in der Filmtransportrichtung orientierte und filmaufwärts des Revolvers 114 angeordnete erste Sprühdüse 150 für ionisierte Luft. Gegebenenfalls ist eine entgegen der Filmtransportrichtung orientierte filmabwärts des Revolvers 114 angeordnete zweite Sprühdüse für ionisierte Luft zusätzlich vorhanden. Mit dieser ionisierten Luft kann zusätzlich zur Reinigungsfunktion das Luftpolster während des Transports zwischen dem Hologrammfilm 200 und der Halteeinrichtung 102 aufrechterhalten oder unterstützt werden, sodass der Reinigungseinrichtung 148 eine Doppelfunktion zukommt. Auf der dem Master 104 abgewandte Oberseite des Hologrammfilms 200 wirkt zusätzlich eine dritte Sprühdüse 130 der Reinigungseinrichtung 148 ein.

Anhand von Figuren 2 bis 4 wird nachstehend erläutert, wie ein Filmabschnitt 202 am Master 104 des Belichtungstisches 100 fixiert und anschließend belichtet wird.

Zunächst wird am Revolver 114 derjenige Master 104 ausgewählt, der für eine nachfolgende Hologrammbelichtung genutzt werden soll. Dabei wird die Halteeinrichtung 102 mit ihrer Mehrzahl an Masteraufnahmen 154 soweit verdreht, bis sich ein für die Hologrammbelichtung gewünschter Master 104 in dem Belichtungsbereich 204 befindet.

Anschließend wird der zu belichtende Filmabschnitt 202 zu dem in der Halteeinrichtung 102 aufgenommenen, sich im Belichtungsbereich 204 befindenden Master 104 mittels der Filmtransporteinrichtung 106 transportiert, wobei sich die filmaufwärts des Masters 104 oder des Revolvers 114 gelegene Filmhubeinrichtung 138 in einer angehobenen, der Transportkonfiguration entsprechenden Stellung befindet, sodass der Hologrammfilm 200 gegenüber dem Master 104 derart gehalten wird, dass die Oberfläche des zu belichtenden Filmabschnitts 202 und die Oberfläche des Masters 104 unter einem spitzen Winkel aufeinander zu oder voneinander weg verlaufend orientiert sind.

Nun wird mittels der Anpressrolle 122 der Aufstreifeinrichtung 120 der Filmabschnitt 202 auf den Master 104 ausgehend von dem spitzen Winkel auf den Master 104 aufgestreift, wobei zusätzlich eine Saugluft, also ein Unterdruck an oder um den Master 104 mittels der Drucklufteinrichtung 108 vorliegt.

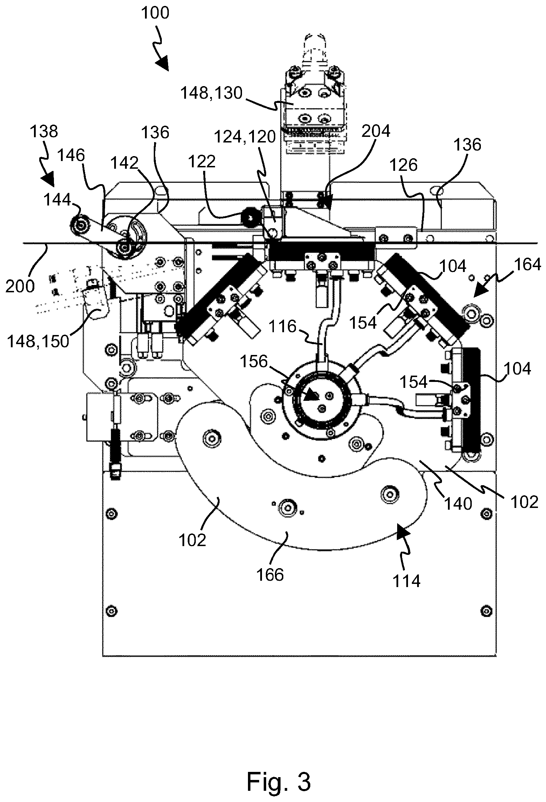

Dabei wird vorliegend die Anpressrolle 122 aus ihrer rechten Stellung gemäß Figur 2 in die in Figur 3 gezeigte linke Stellung verfahren. Zeitgleich oder anschließend wird auch die Filmhubeinrichtung 138 in die abgesenkte Stellung überführt.

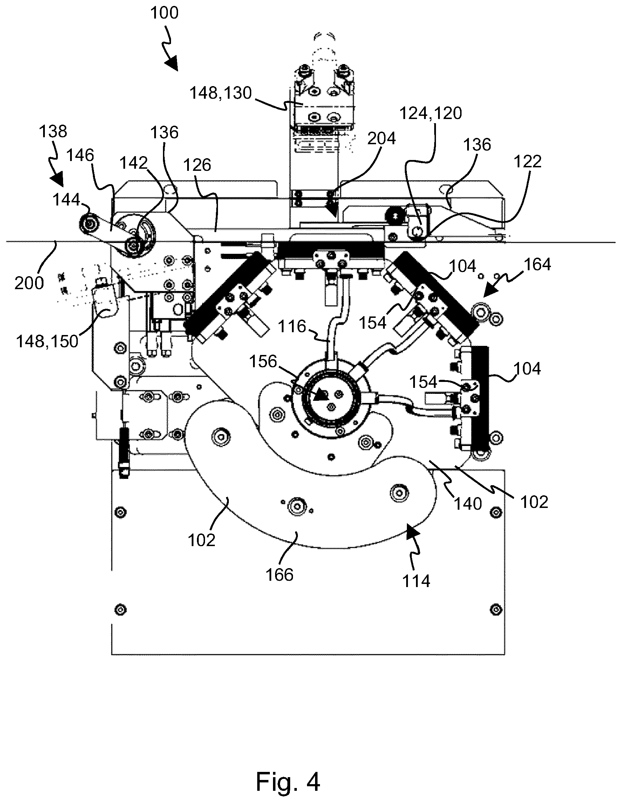

Anschließend wird die Anpressrolle 122 aus linken Stellung gemäß Figur 3 in die in Figur 4 gezeigte rechte Stellung verfahren, wobei der Filmabschnitt 202 ein zweites Mal auf den sich im Belichtungsbereich 204 befindlichen Master 104 aufgestreift wird, sodass dann eine Belichtung des Filmabschnitts 202 erfolgen kann.

In vorteilhafter Weise und zur Vermeidung von unerwünschten Effekten, beispielsweise durch Newton-Ringe, wird dann die Saugluft reduziert oder der Unterdruck auf ein niedrigeres Maß eingestellt, wobei in einer vorteilhaften Ausgestaltung der Filmabschnitt 202 drucklos am Master 104 gelagert ist. Anschließend wird der Filmabschnitt 202 durch Beleuchten mit dem modulierten Licht 400 belichtet, wodurch das Volumenreflexionshologramm in den Filmabschnitt 202 kopiert wird.

Danach wird der Hologrammfilm 200 mittels der Filmtransporteinrichtung 106 weitertransportiert und ein neuer Filmabschnitt 202 gegenüber dem Master 104 positioniert, wodurch das vorstehende Verfahren erneut durchgeführt wird.

Für die Steuerung der einzelnen Konstituenten der Belichtungsmaschine 300 ist außerdem eine Steuerungseinrichtung 326 vorhanden (Fig. 1). Die Steuerungseinrichtung 326 ist dabei in vorteilhafter Weise ausgebildet, die Lichtquelle 304 und/oder die Ablenk- und Scaneinrichtung 310 und/oder den Lichtmodulator 314 und/oder die Filmtransporteinrichtung 106 und/oder die Drucklufteinrichtung 108 und/oder die Aufstreifeinrichtung 120 und/oder die Reinigungseinrichtung 148 und/oder die Einrichtung zur Festlegung der Drehlage des Revolvers zu steuern.

### BEZUGSZEICHENLISTE

- 100: Belichtungstisch
- 102: Halteeinrichtung
- 104: Master
- 106: Filmtransporteinrichtung
- 108: Drucklufteinrichtung (Saugeinrichtung und/oder Blaseinrichtung)
- 110: Filmrolle (unbelichteter Holofilm)
- 112: Gasdurchtrittsanordnung
- 114: Revolver
- 116: Kanal (Druckluft/Saugluft)
- 118: weitere Filmrolle (belichteter Holofilm)
- 120: Aufstreifeinrichtung
- 122: Anpressrolle
- 124: Schlitten
- 126: Verfahrachse (Schlitten)
- 130: dritte Sprühdüse
- 136: Anschlag
- 138: Filmhubeinrichtung
- 140: Platte
- 142: Filmhubwalze
- 144: Führungswalze
- 146: Hebelarm
- 148: Reinigungseinrichtung
- 150: erste Sprühdüse
- 154: Masteraufnahme
- 156: Drehlagerung
- 164: Masterabschnitt
- 166: Gegengewicht
- 200: Hologrammfilm
- 202: Filmabschnitt (zu belichtender Filmabschnitt)
- 204: Belichtungsbereich
- 300: Hologrammbelichtungsmaschine
- 302: Belichtungseinrichtung
- 304: Lichtquelle (z.B. Laser)
- 306: Strahlführungsoptik
- 308: Spiegel
- 310: Ablenk- und Scaneinrichtung
- 312: Strahlteiler
- 314: Lichtmodulator
- 316: Siliziumschicht
- 318: Flüssigkristallzelle
- 320: Schutzscheibe
- 322: Strahlformungseinrichtung (z.B. Powell- oder Zylinderlinse)
- 324: Polarisationsfilter
- 326: Steuerungseinrichtung
- 400: Licht

## Patentansprüche

1. Belichtungstisch (100) für eine Hologrammbelichtungsmaschine (300),
mit einer Halteeinrichtung (102), in der eine Masteraufnahme (154) ausgebildet oder vorhanden ist, die ausgestaltet ist, einen Master (104) aufzunehmen,
und mit einer Filmführung, die ausgebildet ist, einen Hologrammfilm (200) relativ bezüglich der Halteeinrichtung (102) zu führen und einen zu belichtenden Filmabschnitt (202) in einem Belichtungsbereich (204) relativ bezüglich des Masters (104) für eine Hologrammbelichtung zu positionieren, wobei
die Halteeinrichtung (102) als ein Revolver (114) mit einer Mehrzahl an radial orientierten Masteraufnahmen (154) gebildet ist, der senkrecht bezüglich der optischen Achse der Hologrammbelichtung rotierbar gelagert ist,
**dadurch gekennzeichnet, dass**
eine Einrichtung zur Festlegung der Revolverdrehlage vorhanden ist, welche durch eine zur Anzahl der Masteraufnahmen (154) korrespondierende Anzahl an Rastsitzen sowie durch mindestens ein Rastglied gebildet ist, und dass das Rastglied verstellbar ist zwischen einer aus den Rastsitzen ausgerückten, die Drehung des Revolvers (114) ermöglichenden Stellung und einer in einen der Rastsitze eingerückten, die Drehung des Revolvers (114) unterbindenden Stellung.

2. Belichtungstisch (100) nach Anspruch 1, **dadurch gekennzeichnet, dass** der Revolver (114) eine Platte (140) umfasst, von der sich senkrecht die Masteraufnahmen (154) erstrecken.

3. Belichtungstisch (100) nach Anspruch 1 oder 2, **dadurch gekennzeichnet, dass** die Masteraufnahmen (154) an einem Masterabschnitt (164) des Umfangs der Platte (140) verteilt angeordnet sind, und dass an einem zum Masterabschnitt (164) komplementären Abschnitt des Umfangs der Platte (140) ein Gegengewicht (166) vorhanden ist.

4. Belichtungstisch (100) nach einem der Ansprüche 1 bis 3, **dadurch gekennzeichnet, dass** der als Revolver gebildeten Halteeinrichtung (102) eine Drucklufteinrichtung (108) zugeordnet ist, die ausgebildet ist, den Filmabschnitt (202) mittels eines Unterdrucks an dem in der Halteeinrichtung (102) aufgenommenen und sich im Belichtungsbereich (204) befindenden Master (104) zumindest zeitweise zu fixieren.

5. Belichtungstisch (100) nach Anspruch 4, **dadurch gekennzeichnet, dass** die Drucklufteinrichtung (108) aus einer Mehrzahl an Gasdurchtrittsanordnungen (112) gebildet ist, dass jeder Masteraufnahme (154) oder dem entsprechenden, darin aufgenommenen Master (104) mindestens eine der Gasdurchtrittsanordnungen (112) zugewiesen ist, und dass die Drucklufteinrichtung (108) mindestens einen Kanal (116) umfasst, der ausschließlich mit der mindestens einen sich im Belichtungsbereich (204) befindlichen Gasdurchtrittsanordnung (112) strömungsmechanisch verbunden ist.

6. Belichtungstisch (100) nach einem der Ansprüche 1 bis 5, **dadurch gekennzeichnet, dass** eine Aufstreifeinrichtung (120) vorhanden ist, um den zu belichtenden Filmabschnitt (202) auf den sich im Belichtungsbereich (204) befindenden Master (104) aufzustreifen, und dass die Aufstreifeinrichtung (120) einen zwischen zwei Anschlägen (136) verschiebbaren Schlitten (124) umfasst, an welchem eine auf einer Drehachse drehbar gelagerte und mit dem Filmabschnitt (202) wechselwirkende Anpressrolle (122) gelagert ist.

7. Belichtungstisch (100) nach Anspruch 6, **dadurch gekennzeichnet, dass** die Filmführung eine Filmhubeinrichtung (138) umfasst, die zwischen einer angehobenen, einer Transportkonfiguration entsprechenden Stellung und einer abgesenkten, einer Belichtungskonfiguration entsprechenden Stellung verstellbar ist.

8. Verfahren zum Einbringen eines Volumenreflexionshologramms in einen Filmabschnitt (202) eines Hologrammfilms (200), umfassend die Schritte:
- Verdrehen einer als ein Revolver (114) gebildeten Halteeinrichtung (102) mit einer Mehrzahl an radial orientierten Masteraufnahmen (154) senkrecht bezüglich der optischen Achse der Hologrammbelichtung soweit, bis sich ein für die Hologrammbelichtung gewünschter Master (104) in einem Belichtungsbereich (204) befindet, wobei eine Einrichtung zur Festlegung der Revolverdrehlage vorhanden ist, welche durch eine zur Anzahl der Masteraufnahmen (154) korrespondierende Anzahl an Rastsitzen sowie durch mindestens ein Rastglied gebildet ist, und dass das Rastglied verstellbar ist zwischen einer aus den Rastsitzen ausgerückten, die Drehung des Revolvers (114) ermöglichenden Stellung und einer in einen der Rastsitze eingerückten, die Drehung des Revolvers (114) unterbindenden Stellung
- Transportieren des zu belichtenden Filmabschnitts (202) in den Belichtungsbereich (204) mittels einer Filmtransporteinrichtung (106),
- zeitgleiches oder nachfolgendes Anheben des Hologrammfilms (200) mittels einer Filmhubeinrichtung (138) und bilden eines spitzen Winkels zwischen den sich zugewandten Oberflächen von Filmabschnitt (202) und Master (104),
- Aufstreifen des Filmabschnitts (202) auf den Master (104) ausgehend vom spitzen Winkel mittels einer Anpressrolle (122), und
- Belichten des Hologramms in den Filmabschnitt (202).

9. Verfahren nach Anspruch 8, **dadurch gekennzeichnet, dass** vor und/oder während des Aufstreifens ein Unterdruck an oder um den Master (104) bereitgestellt wird, womit der Filmabschnitt (202) an den Master (104) gesaugt wird, und dass die Anpressrolle (122) ein zweites Mal über den Filmabschnitt (202) gerollt wird, bevor der Hologrammfilm (200) belichtet wird.

## Claims

1. An exposure table (100) for a hologram exposure machine (300),
comprising a holding device (102) in which a master holder (154) is formed or provided, which is configured to hold a master (104),
and comprising a film guide configured to guide a hologram film (200) relative to the holding device (102) and to position a section of film (202) to be exposed within an exposure area (204) relative to the master (104) for hologram exposure,
wherein
the holding device (102) is formed as a turret (114) with a plurality of radially oriented master receptacles (154), which is mounted so as to be rotatable perpendicular to the optical axis of the hologram exposure,
**characterised in that**
there is a means for fixing the rotational position of the turret, which comprises a number of detent seats corresponding to the number of master receptacles (154) and at least one locking element, and that the locking element is adjustable between a position disengaged from the locking seats, which allows the turret (114) to rotate, and a position engaged in one of the locking seats, which prevents the turret (114) from rotating.

2. The exposure table (100) according to claim 1, **characterised in that** the turret (114) comprises a plate (140) from which the master holders (154) extend perpendicularly.

3. The exposure table (100) as per claim 1 or 2, **characterised in that** the master receptacles (154) are distributed around a master section (164) of the circumference of the plate (140), and **in that** a counterweight (166) is provided on a section of the circumference of the plate (140) complementary to the master section (164).

4. The exposure table (100) according to any one of claims 1 to 3, **characterised in that** the holding device (102), which is configured as the turret, is associated with a compressed air device (108) which is designed to apply (202) to the master (104) held in the holding device (102) and located in the exposure area (204) by means of a vacuum, at least temporarily.

5. The exposure table (100) according to claim 4, **characterised in that** the compressed air device (108) comprises a plurality of gas passage arrangements (112), **in that** at least one of the gas passage arrangements (112) is assigned to each master holder (154) or to the corresponding master (104) held therein, and that the compressed air device (108) comprises at least one channel (116) which is fluidically connected exclusively to the at least one gas passage arrangement (112) located in the exposure area (204).

6. The exposure table (100) according to any one of claims 1 to 5, **characterised in that** a feeding device (120) is provided to feed the film section (202) to be exposed onto the master (104) located in the exposure area (204), and **in that** the feeding device (120) comprises a carriage (124) which is displaceable between two stops (136), on which a pressure roller (122) is mounted, which is rotatably mounted on a rotational axis and interacts with the film section (202).

7. The exposure table (100) according to claim 6, **characterised in that** the film guide comprises a film lifting device (138) which is adjustable between a raised position corresponding to a transport configuration and a lowered position corresponding to an exposure configuration.

8. A method for incorporating a volume reflection hologram into a film section (202) of a hologram film (200), comprising the steps of:
- rotating a holding device (102), formed as a turret (114) with a plurality of radially oriented master receptacles (154), perpendicular to the optical axis of the hologram exposure until a master (104) required for the hologram exposure is located within an exposure area (204) for the hologram exposure, wherein means are provided for fixing the rotational position of the turret, which means comprise a number of detent seats corresponding to the number of master receptacles (154) and at least one locking element, and in that the locking element is adjustable between a position disengaged from the locking seats, which allows the turret (114) to rotate, and a position engaged in one of the locking seats, which prevents the turret (114) from rotating
- transporting the section of film (202) to be exposed into the exposure area (204) by means of a film transport device (106),
- simultaneously or subsequently raising the hologram film (200) by means of a film-lifting device (138) and forming an acute angle between the facing surfaces of the film section (202) and the master (104),
- pressing the film section (202) onto the master (104) starting from the acute angle by means of a pressure roller (122), and
- Exposing the hologram onto the section of film (202).

9. The method according to claim 8, **characterised in that**, before and/or during the application of the film, a vacuum is created at or around the master (104), thereby drawing the film section (202) onto the master (104), and **in that** the pressure roller (122) is rolled over the film section (202) a second time before the hologram film (200) is exposed.

## Revendications

1. Table d'exposition (100) pour une machine d'exposition d'hologrammes (300),
comprenant un dispositif de retenue (102) dans lequel est formé ou prévu un logement pour original (154) conçu pour recevoir un original (104),
et comportant un guide-film conçu pour guider un film holographique (200) par rapport au dispositif de retenue (102) et pour positionner une section de film (202) à exposer dans une zone d'exposition (204) par rapport à l'original (104) en vue d'une exposition holographique,
dans lequel
le dispositif de retenue (102) est réalisé sous la forme d'un revolver (114) comportant une pluralité de logements pour original (154) orientés radialement, qui est monté de manière à pouvoir tourner perpendiculairement à l'axe optique de l'exposition holographique,
**caractérisé en ce que**
il existe un dispositif permettant de fixer la position de rotation du revolver, lequel est constitué d'un nombre de logements pour original correspondant au nombre de logements pour original (154) ainsi que par au moins un élément de verrouillage, et **en ce que** l'élément de verrouillage est réglable entre une position désengagée des sièges de verrouillage, permettant la rotation du revolver (114), et une position enclenchée dans l'un des sièges de verrouillage, empêchant la rotation du revolver (114).

2. Table d'exposition (100) selon la revendication 1, **caractérisée en ce que** le revolver (114) comprend une plaque (140) à partir de laquelle s'étendent perpendiculairement les logements pour original (154).

3. Table d'exposition (100) selon la revendication 1 ou 2, **caractérisée en ce que** les logements pour originaux (154) sont répartis sur une partie de l'original (164) du pourtour de la plaque (140), et **en ce qu'**un contrepoids (166) est prévu sur une partie du pourtour de la plaque (140) complémentaire à la partie de l'original (164).

4. Table d'exposition (100) selon l'une des revendications 1 à 3, **caractérisée en ce qu'**un dispositif à air comprimé (108) est associé au dispositif de retenue (102) réalisé sous forme de revolver, lequel dispositif est conçu pour appliquer, au moins temporairement, une dépression sur le segment de film (202) au moyen d'une dépression sur l'original (104) logé dans le dispositif de retenue (102) et se trouvant dans la zone d'exposition (204), au moins temporairement.

5. Table d'exposition (100) selon la revendication 4, **caractérisée en ce que** le dispositif à air comprimé (108) est constitué d'une pluralité de dispositifs de passage de gaz (112), **en ce qu'**au moins l'un des dispositifs de passage de gaz (112) est attribué à chaque logement pour original (154) ou à l'original (104) correspondant qui y est logé, et **en ce que** le dispositif à air comprimé (108) comprend au moins un canal (116) qui est relié, du point de vue de la mécanique des fluides, exclusivement à l'au moins un dispositif de passage de gaz (112) situé dans la zone d'exposition (204).

6. Table d'exposition (100) selon l'une des revendications 1 à 5, **caractérisée en ce qu'**un dispositif d'application (120) est prévu pour appliquer le segment de film (202) à exposer sur l'original (104) situé dans la zone d'exposition (204), et **en ce que** le dispositif de pose (120) comprend un chariot (124) pouvant coulisser entre deux butées (136), sur lequel est monté un rouleau de pression (122) monté de manière rotative sur un axe de rotation et interagissant avec le segment de film (202).

7. Table d'exposition (100) selon la revendication 6, **caractérisée en ce que** le guide-film comprend un dispositif de levage de film (138) qui est réglable entre une position relevée, correspondant à une configuration de transport, et une position abaissée, correspondant à une configuration d'exposition.

8. Procédé d'intégration d'un hologramme de réflexion en volume dans un segment de film (202) d'un film holographique (200), comprenant les étapes suivantes:
- faire pivoter un dispositif de retenue (102), réalisé sous la forme d'un revolver (114) comportant une pluralité de logements pour originaux (154) orientés radialement, perpendiculairement à l'axe optique de l'exposition de l'hologramme, jusqu'à ce qu'un original (104) souhaité pour l'exposition de l'hologramme se trouve dans une zone d'exposition (204) pour l'exposition de l'hologramme, un dispositif étant prévu pour fixer la position de rotation du revolver, lequel est constitué d'un nombre de logements pour originaux correspondant au nombre de logements pour masters (154) ainsi que d'au moins un élément de verrouillage, et en ce que l'élément de verrouillage est réglable entre une position désengagée des sièges de verrouillage, permettant la rotation du revolver (114), et une position enclenchée dans l'un des sièges de verrouillage, empêchant la rotation du revolver (114)
- le transport du segment de film (202) à exposer dans la zone d'exposition (204) au moyen d'un dispositif de transport de film (106),
- levage simultané ou ultérieur du film holographique (200) à l'aide d'un dispositif de levage de film (138) et formation d'un angle aigu entre les surfaces en regard du segment de film (202) et de l'original (104),
- pressage de la section de film (202) contre l'original (104) à partir de l'angle aigu à l'aide d'un rouleau de pression (122), et
- Exposition de l'hologramme sur le segment de film (202).

9. Procédé selon la revendication 8, **caractérisé en ce qu'**avant et/ou pendant l'enroulement, une dépression est créée au niveau ou autour du maître (104), ce qui permet d'aspirer le segment de film (202) contre le maître (104), et **en ce que** le rouleau de pression (122) passe une deuxième fois sur le segment de film (202) avant que le film holographique (200) ne soit exposé.
